(19) Europäisches Patentamt
European Patent Office
Office européen des brevets

(11) **EP 4 534 266 A1**

(12) **DEMANDE DE BREVET EUROPEEN**

(43) Date de publication:
**09.04.2025 Bulletin 2025/15**

(21) Numéro de dépôt: **24204629.0**

(22) Date de dépôt: **04.10.2024**

(51) Classification Internationale des Brevets (IPC):
***B27K 3/02*** *(2006.01)* ***B27K 3/08*** *(2006.01)*
***B27K 3/34*** *(2006.01)* ***C07C 249/02*** *(2006.01)*

(52) Classification Coopérative des Brevets (CPC):
**B27K 3/0278; B27K 3/086; B27K 3/346;**
B27K 2240/90

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.10.2023 FR 2310735**

(71) Demandeur: **Commissariat à l'Energie Atomique et aux Energies Alternatives**
**75015 Paris (FR)**

(72) Inventeurs:
- **TRIQUET, Juliette**
  **38054 Grenoble cedex 09 (FR)**
- **PILUSO, Pierre**
  **38054 Grenoble cedex 9 (FR)**
- **RENARD, Olivier**
  **38054 Grenoble cedex 9 (FR)**
- **AUGER, Aurélien**
  **38054 Grenoble cedex 09 (FR)**

(74) Mandataire: **Germain Maureau**
**12, rue Boileau**
**69006 Lyon (FR)**

(54) **MODIFICATION CHIMIQUE DU BOIS POUR AMÉLIORER SA TENUE À LA LUMIÈRE**

(57) Procédé de protection anti-UV pour pièces en bois, le procédé de protection anti-UV comprenant les étapes suivantes :
a) fourniture d'une pièce en bois comprenant des composants polymériques sur lesquels sont greffés des groupements amines,
b) modification chimique d'au moins un groupement amine par réaction avec un réactif aldéhyde aromatique, de sorte à greffer au moins un groupement imine aromatique sur les composants polymériques.

[Fig. 2]

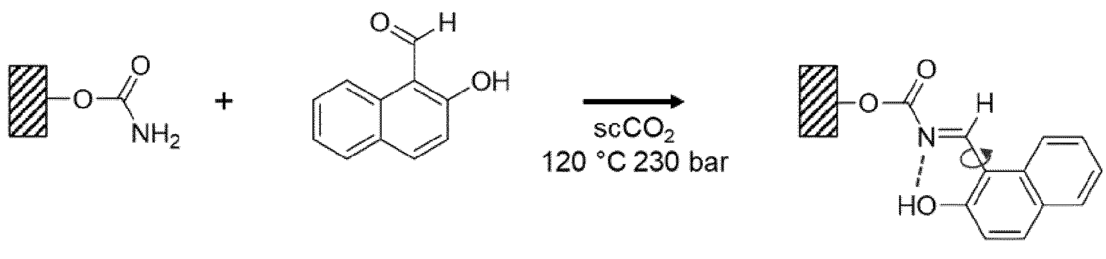


EP 4 534 266 A1

## Description

La présente invention se rapporte au domaine du bois et traite de sa stabilité face aux rayonnements ultra violets. La présente invention concerne en particulier un procédé de protection à l'égard des ultraviolets de pièces en bois, ainsi qu'une pièce en bois protégée des ultraviolets par ledit procédé.

En raison de sa capacité à stocker le carbone et de son impact environnemental réduit par rapport à d'autres matériaux, l'utilisation du bois comme matériau de construction suscite un regain d'intérêt. Cependant, sa faible durabilité constitue un obstacle à son utilisation pour certaines applications. Pour les applications de revêtement extérieur, la sensibilité du bois à l'eau, et à l'attaque des micro-organismes peuvent conduire à sa décomposition et limitent sa stabilité dimensionnelle au cours du temps. Le bois est également sensible aux irradiations dans le domaine des ultraviolets qui entraîne une dégradation de la lignine et la création d'une couche de cellulose grise à sa surface.

L'application de traitements de protection du bois est alors nécessaire pour améliorer ses propriétés. Les traitements peuvent être appliqués en surface, tels que par revêtement ou par application de peinture, par imprégnation dans le bois, ou bien consister en la modification chimique d'au moins en partie de ses composants. La modification du bois a l'avantage d'être un traitement plus efficace sur le long terme. En effet, les revêtements ou les peintures s'abîment et doivent être remplacés, une tierce matière imprégnée peut être lessivée à la suite des intempéries et ressortir du bois à court ou moyen terme, la simple imprégnation ne constituant pas un traitement fixé durablement.

Ainsi, il existe un besoin important de mettre au point une méthode de fixation d'un agent protecteur sur le bois, qui soit durable et efficace contre les ultraviolets.

A cet effet, la présente invention propose un procédé de protection anti-UV (anti ultraviolets) pour pièces en bois, le procédé de protection anti-UV comprenant les étapes suivantes :

a) fourniture d'une pièce en bois comprenant des composants polymériques choisis parmi la lignine, la cellulose et les hémicelluloses, sur lesquels est greffé au moins un groupement amine, ledit au moins un groupement amine ayant été greffé sur lesdits composants polymériques par formation d'une liaison covalente au cours d'une réaction de greffe i) réalisée préalablement à l'étape a) par réaction d'au moins un réactif aminé sur au moins une fonction hydroxyle présente naturellement sur lesdits composants polymériques,
b) modification chimique du au moins un groupement amine par réaction avec un réactif aldéhyde aromatique, de sorte à greffer, par formation d'une liaison covalente, au moins un groupement imine aromatique sur lesdits composants polymériques.

Grâce à ce procédé, la pièce en bois est fonctionalisée par un groupement aromatique qui lui apporte les propiétés anti-UV de façon durable dans le temps. Ce procédé genère en effet la formation d'une liaison covalente entre le groupement imine aromatique et le composant polymèrique du bois, ce qui constitue une modification durable au contraire des traitements de protection de surface telle que la peinture ou de la simple imprégnation qui ressort du bois au cours du temps. Le groupe aromatique permet avantageusement d'absorber les UV en lieu et place des composants naturels du bois, augmentant ainsi la longévité de ce dernier.

De plus, l'existence d'une liaison covalente simple entre le groupe aromatique et les composants du bois permet une rotation du groupe aromatique autour de cette liaison. L'énergie emmagasinée par le groupe aromatique par l'absorption des UV peut être dissipée au moins en partie au cours de la rotation. ceci permet d'augmenter la durée de vie de ce groupe aromatique par comparaison au cas de figure où aucune libération d'énergie emmagasinée ne peut être obtenue.

De préférence, le réactif aldéhyde aromatique peut comprendre un groupement aromatique substitué par une fonction aldéhyde et au moins une fonction hydroxyle. Ceci augmente les possibilités de délocalisation électronique dans ce groupement, ce qui participe à abaisser son niveau d'énergie.

Dans un mode de réalisation de l'invention, l'au moins une fonction hydroxyle peut être disposée en position ortho de la fonction aldéhyde sur le groupement aromatique. Cette configuration du réactif aldéhyde est avantageusement conservée dans l'imine greffée. Ceci permet à la fonction hydroxyle de former une liaison hydrogène avec l'azote de l'imine et de former un cycle à 6 atomes. Ce cycle est plan et se rapproche de la configuration d'un groupe aromatique. Son niveau d'énergie est alors abaissé, ce qui participe à stabiliser encore davantage la greffe. De plus, comme il est nécessaire de rompre la liaison hydrogène pour que le groupe aromatique tourne axialement autour de la liaison covalente, la rupture consommant de l'énergie, elle diminue celle du groupement aromatique et le stabilise.

Dans un mode de réalisation de l'invention, le réactif aldéhyde aromatique peut être choisi parmi du 1-hydroxy-2-naphtaldéhyde, du 2-hydroxy-1-naphthaldehyde, du 2,4-dihydroxybenzaldehyde, et/ou un composé de formule (I) avec R1, R2, R3 et R4 choisis indépendamment les uns des autres parmi l'hydrogène et un alkyle.

[Chem. 1]

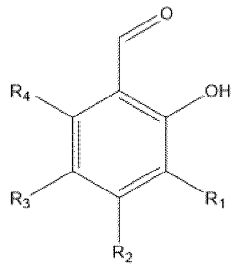

(I)

Ces réactifs ont donné de très bons résultats tant dans le taux de greffe d'imine que dans l'efficacité du groupement protecteur contre les UV. Néanmoins et pour les raisons exposées ci-dessus, tout réactif aldéhyde comportant un groupe aromatique est apte à permettre la stabilisation de la pièce en bois et limitant l'apparition de la couche grisâtre en surface.

Dans un mode de réalisation de l'invention, l'étape b) peut comprendre les étapes suivantes :

- disposition de la pièce en bois dans un contenant, notamment une cuve d'autoclave,
- disposition du réactif aldéhyde aromatique dans le contenant, à distance de la pièce en bois, ie le réactif aldéhyde aromatique n'est pas en contact avec la pièce en bois, et
- addition de dioxyde de carbone,
- application d'une pression et d'une température telles que le dioxyde de carbone soit à l'état supercritique, ou liquide, de manière à faire réagir le réactif aldéhyde aromatique avec l'au moins un groupement amine et conduire à la greffe d'au moins un groupement imine aromatique sur les composants polymériques de la pièce en bois.

Cette étape b) permet de créer une liaison covalente durable entre au moins un composant polymérique du bois et un groupement aromatique absorbant les UV. L'utilisation avantageuse de $scCO_2$ en tant que solvant vert facilite également l'imprégnation de réactif aldéhyde aromatique au coeur du bois ce qui favorise la réaction. Le $scCO_2$ joue le rôle de solvant et de milieu réactionnel.

Le bois doit être à distance du réactif car dans le cas contraire, la pénétration du réactif est régie par un phénomène de capillarité, ce qui risque d'entrainer une non-homogénéité de l'imprégnation.

Concrètement, le réactif peut être ajouté au fond du contenant et les échantillons posés sur une surélévation dont la hauteur est supérieure au niveau du liquide. Le $CO_2$ passant en phase supercritique va solubiliser le réactif et l'entraîner vers et dans le bois. Dans ce cas, il n'y a pas de phénomène de tension de surface en phase supercritique, ce qui entraine une absence de forces capillaires.

Dans une version industrielle, le procédé pourrait être un peu différent : le réactif peut être placé dans un autoclave auxiliaire dans lequel du $CO_2$ supercritique circule. Celui-ci solubilise le réactif et le mélange est introduit dans le réacteur de traitement (le contenant par exemple) contenant les échantillons de bois. Ainsi, tout le volume de traitement pourra être occupé avec du bois. Le même mode de réalisation peut s'appliquer lorsqu'on utilise du $CO_2$ liquide.

Selon un mode de réalisation de l'invention, la pièce en bois peut présenter un taux d'humidité inférieur ou égal à 15%, de préférence compris entre 4% et 15%, par exemple un taux d'humidité compris entre environ 4 et 7%, lors de la disposition du réactif aldéhyde aromatique dans le contenant. Le taux d'humidité du bois peut être maitrisé afin qu'il soit à un taux d'humidité proche de celui requis par son utilisation finale (extérieur, intérieur, ...) afin de limiter ses variations dimensionnelles. En effet, en dessous du PSF (ou point de saturation des fibres), le bois subit des variations dimensionnelles qui le fragilisent.

Ce taux d'humidité peut être notamment atteint par séchage du bois de façon naturelle ou en autoclave. Le séchage peut consister à réaliser des cycles température/taux d'humidité contrôlés de manière à abaisser progressivement le taux d'humidité du bois et ce de manière homogène dans l'épaisseur.

En théorie, on pourrait aller jusqu'à un bois sec (0%), mais cela n'a pas de réalité industrielle à ce jour car le procédé de séchage requis serait trop coûteux.

Le taux d'humidité peut être mesuré par pesée de l'échantillon avant et après un séchage à 103°C pendant 24h : par calcul on obtient le taux d'humidité moyen.

Sur un produit industriel, un humidimètre à pointe est habituellement utilisé : on obtient des valeurs d'humidité en fonction de la zone de mesure, ainsi que de la pénétration des pointes dans l'épaisseur.

Dans un mode de réalisation de l'invention, l'étape b) peut être réalisée sous pression, notamment une pression comprise dans une plage entre 5 et 300 bars, par exemple dans une plage entre environ 210 et environ 230 bars, notamment environ 230 bars. L'étape b) réalisée sous pression permet de modifier le dioxyde de carbone de l'état gazeux

à un état liquide, voire proche de l'état supercritique, et de préférence de modifier le dioxyde de carbone de l'état gazeux à l'état supercritique.

Dans un mode de réalisation de l'invention, l'étape b) peut être réalisée avec une augmentation de la température, notamment pour atteindre une plage de température comprise entre 80 et 150°C, par exemple une plage de température entre environ 100°C et environ 130°C, notamment environ 120°C. L'application de température accompagne l'effet de la pression afin de permettre le passage du dioxyde de carbone de l'état gazeux à l'état supercritique.

Comme expliqué ci-dessus, une réaction de greffe i) est réalisée préalablement à l'étape a), comprenant la greffe d'au moins un groupement amine par réaction d'au moins un réactif aminé sur au moins une fonction hydroxyle des composants polymériques de la pièce en bois. La fonction hydroxyle est en effet une fonction se trouvant naturellement sur les composants polymériques tels que la lignine, la cellulose ou l'hémicellulose, ainsi que leurs dérivés. Elle représente un site réactionnel de choix pour la fonctionnalisation. Elle est facilement accessible, réactive et apte à former une liaison covalente avec des réactifs dans des conditions réactionnelles appropriées.

Dans un mode de réalisation de l'invention, le réactif aminé peut comprendre une amine primaire, voire une amine secondaire, de sorte à faciliter sa modification ultérieure à l'étape b) en imine.

Dans un mode de réalisation de l'invention, l'au moins un réactif aminé peut être choisi parmi l'urée, un diisocyanate, et/ou un silane comprenant un groupement aminé terminal dont l'Amino-Propyl TriéthoxySilane (APTES). Ces réactifs aminés ayant tous des groupements très réactifs vis-à-vis des hydroxyles, leurs réactivités sont suffisantes pour assurer une greffe en surface et sub-surface du bois et la réalisation de la seconde étape en présence du réactif aldéhyde considéré. Par exemple, dans le cas des diisocyanates, l'un des groupes isocyanates se fixe très rapidement sur les groupements hydroxyles du bois, le second groupe isocyanate après hydrolyse se transforme en un groupement amine souhaité $-NH_2$, avec dégagement de $CO_2$.

De préférence, le réactif aminé est de l'urée.

Dans un mode de réalisation de l'invention, l'APTES peut être utilisé en solution dans l'éthanol à une concentration comprise entre 10 et 20% en masse, mélangé avec une solution aqueuse d'ammoniaque à pH 10. Le volume de solution ammoniacale peut être notamment compris entre 1 et 10% du volume de la solution d'APTES dans l'éthanol utilisée.

Le taux de greffe sur la pièce en bois est mesuré par l'évaluation d'une prise en masse (sur bois sec, pour ne pas compter l'eau dans le bois). Pour être efficace, les prises en masse en APTES par exemple sont au minimum d'environ 2% et par exemple d'environ 7.5%, pour assurer la viabilité de la seconde réaction. En effet, une greffe par une imine aromatique efficace peut consister en une greffe en surface et en sub-surface et non nécessairement sur la totalité du volume de la pièce en bois considérée.

Selon un mode de réalisation de l'invention, la réaction de greffe i) d'au moins un groupement amine comprend les étapes suivantes :

- disposition d'une pièce en bois dans un contenant,
- disposition de l'urée diluée dans l'eau dans le contenant et/ou de la solution d'APTES dans l'éthanol mixée à la solution aqueuse d'ammoniaque, de manière à submerger la pièce en bois,
- application d'un vide, notamment un vide entre 200 et 400 mbar, par exemple à plusieurs reprises, de sorte à favoriser l'imprégnation du réactif aminé au coeur du bois,
- séchage de la pièce en bois, et
- application d'un traitement thermique de chauffage pour atteindre une température comprise entre 100 et 150°C pendant quelques heures, notamment pendant environ 4 h à 24 h.

Selon d'autres caractéristiques, le procédé de protection de l'invention comporte une ou plusieurs des caractéristiques optionnelles suivantes considérées seules ou en combinaison :
L'étape b) comprend la modification d'une pluralité de groupements amines sur une pluralité de composants polymériques de la pièce en bois.

L'étape b) comprend la modification d'environ 99% des groupements amines greffées sur la pièce en bois.

L'étape b) comprend la modification de la totalité des groupements amines sur au moins un ou la totalité des composants polymériques de la pièce en bois.

De façon générale, la quasi-totalité des fonctions amines greffées réagissent avec l'aldéhyde aromatique. La prise en masse observée lors de cette réaction est d'au minimum 0,5%. Elle peut dépasser cette valeur pour atteindre par exemple 10%, notamment lorsque le traitement appliqué pénètre au dela de la surface de la pièce en bois. Toutefois, pour des raisons d'efficacité et économiques , il n'est pas nécessaire d'atteindre une telle greffe dans la profondeur de la pièce de bois.

Selon un autre aspect, l'invention propose une pièce en bois protégée des UV, la pièce en bois comprenant des composants polymériques choisis parmi la lignine, la cellulose et les hémicelluloses sur au moins un desquels est greffé,

par formation d'une liaison covalente, au moins un groupement imine aromatique, apte à absorber les rayonnements dans le domaine des ultra-violets.

Dans un mode de réalisation de l'invention, une majorité des composants polymériques de la surface et de la sub-surface de la pièce en bois sont modifiés par la greffe dudit groupement imine aromatique.

Ainsi modifiée, la pièce en bois est associée de manière covalente à une molécule absorbant les UV permettant de protéger les composants polymériques des UV de façon durable.

Selon une disposition, l'au moins un groupement imine aromatique comprend un groupement aromatique présentant au moins un substituant hydroxyle en ortho de la fonction imine. Cette disposition de la fonction hydroxyle permet de stabiliser le groupement imine aromatique permettant alors une absorption plus importante et durable des rayonnements UV. En conséquence, la pièce en bois absorbe moins d'énergie provenant des UV, ce qui augmente la durée de sa protection. La coloration grise qui apparait au cours du temps sera moins forte et plus lente à apparaitre sur la pièce en bois protégée.

D'autres aspects, buts et avantages de la présente invention apparaîtront mieux à la lecture de la description suivante de deux modes de réalisation de celle-ci, donnés à titre d'exemple non limitatif et faite en référence aux figures suivantes :

[Fig.1] illustre la réaction de greffe de l'amine dérivée de l'urée.
[Fig.2] illustre la réaction de formation de l'imine.
[Fig.3] illustre la réaction de formation de l'imine en partant d'une amine dérivée de l'APTES.
[Fig.4] illustre la pseudo-absorption avant et après formation de l'imine.
[Fig.5] illustre la mesure de l'évolution colorimétrique de pièces en bois après différents traitements de vieillissement accéléré par UV.
[Fig.6] illustrent quelques réactifs aldéhydes aromatiques hydroxylés utilisés dans l'invention.

En référence aux figures 1 et 2 est illustré la greffe du groupement imine aromatique sur une fonction hydroxyle naturellement présente sur les composants polymères de la pièce en bois. Tout d'abord une première réaction i) débute en submergeant une pièce en bois placée dans un autoclave dans de l'urée diluée dans de l'eau. Un vide est appliqué à 200 mbars pendant 1 heure avant de revenir à la pression atmosphérique pendant encore une heure. Ce cycle est répété au moins deux fois de sorte à bien imprégner l'urée au coeur du bois. La pièce en bois est sortie de l'autoclave et séchée jusqu'à atteindre un taux d'humidité inférieur à 15 %, l'urée restant imprégnée dans le bois.

Puis, la pièce en bois est replacée dans l'autoclave et un traitement thermique est appliqué pour augmenter la température jusqu'à une plage de 120 à 150°C pendant 3 à 6 heures. Ce traitement permet de décomposer l'urée in situ. La décomposition mène à la formation d'ammoniac et d'un isocyanate qui réagit avec la fonction hydroxyle du bois. La pièce en bois est alors fonctionnalisée avec un groupement amine. L'ammoniac est laissé évaporé comme sous produit de réaction.

La deuxième réaction consiste à modifier le groupement amine par hydrolyse et condensation pour former un groupement imine aromatique qui est capable d'absorber les UV (étape b du procédé). Pour ce faire, la pièce en bois et un réactif aldéhyde aromatique, notamment du 2-hydroxy-1-naphthaldéhyde sont ajoutés dans un autoclave, sans être mis en contact. L'autoclave est purgé par l'introduction à trois reprises de dioxyde de carbone à 10 bars. L'air est ainsi chassé de l'autoclave et remplacé par du $CO_2$. La température du milieu réactionnel est augmentée et lorsqu'elle atteint environ 35°C, l'autoclave est pressurisé par l'introduction de $CO_2$ à 50 bars. La température est élevée jusqu'à atteindre environ 120°C puis la pression est augmentée jusqu'à atteindre 230 bars. L'autoclave est maintenu fermé pendant 2 à 6 heures dans ces conditions, puis une fois dépressurisé, la pièce en bois fonctionnalisée par un groupement imine aromatique en est extraite. On notera que cette étape réalisée à l'aide de $CO_2$ supercritique est une voie prometteuse pour augmenter les performances du bois. Le procédé est écologique pour l'extraction, le séchage, l'imprégnation, la modification ou la conversion chimique du bois.

Selon un second mode de réalisation du procédé de protection anti-UV, l'urée est remplacée par de l'Amino-Propyl TriéthoxySilane (APTES), comme illustré à la figure 3. La pièce en bois est là encore submergée dans un autoclave par une solution d'APTES dans l'éthanol mixée avec un volume équivalent d'ammoniaque dans l'eau. Un vide de 400 mbar est appliqué pendant une heure, à plusieurs reprises entre deux retours à la pression atmosphérique pendant également une heure. Ces étapes permettent la bonne imprégnation de la pièce en bois qui est ensuite séchée. Une fois atteint un taux d'humidité inférieur ou égal à 15%, la pièce en bois est de nouveau placée dans l'autoclave pour recevoir un traitement thermique à environ 100°C pendant environ 24 heures. A l'issu de ce traitement, une amine est greffée sur des fonctions hydroxyles de la pièce en bois.

La deuxième réaction consiste à modifier le groupement amine par hydrolyse et condensation pour former en groupement imine aromatique (étape b). Elle est effectuée de la même manière que dans le premier mode de réalisation en utilisant de $scCO_2$. Elle conduit à une pièce en bois sur laquelle une greffe d'un groupement imine aromatique est obtenue.

**Observations visuelles**

L'efficacité du procédé a été évaluée en suivant le changement de couleur au cours d'un vieillissement climatique artificiel. Les échantillons modifiés ont montré un changement de couleur plus faible au cours de l'altération que le bois non modifié.

Pour ce faire, une première pièce en bois naturel et une seconde pièce en bois fonctionalisée par une amine en provenance d'urée ont été fournies pour appliquer la réaction de greffe avec un réactif aldéhyde aromatique selon les conditions de l'étape b). L'observation à l'œil nu des deux pièces en bois traitées de la même façon a montré que la première pièce en bois est restée de couleur naturelle tandis que la seconde s'est légèrement foncée. Aucun grisement n'est apparu. L'augmentation de la coloration de la seconde pièce en bois indique que la greffe du groupement aromatique qui absorbe les rayonnements UV a eu lieu sur le groupement amine, au contraire de la première pièce naturelle.

Dans un second temps, les deux pièces en bois précédemment obtenues ont été trempées pendant 4 heures dans un bain d'acétone afin de reproduire de façon artificielle et accélérée un lessivage du bois en milieu extérieur. L'acétone étant un meilleur solvant que l'eau, son utilisation permet d'accélerer d'éventuels lessivages et dilutions du groupement greffé. L'observation visuelle montre que la coloration ne varie pas après ce traitement, ce qui tend à prouver la greffe du groupement imine aromatique par création d'une liaison covalente.

**Pseudo absorbance** :

La pseudo absorbance analysée par réflectance de la seconde pièce en bois est illustrée à la figure 4. La méthode d'analyse est effectuée par UV-vis Diffuse réflectance spectroscopy (que l'on peut traduire par spectroscopie UV-visible à réflectance diffuse) sur la face tangentielle avec un spectrophotomètre UV-vis-NIR Cary 5000 (Varian Inc., Palo Alto, USA) équipé d'une sphère d'intégration dans la gamme 200-800 nm. La réflectance R est convertie en pseudo-absorbance via l'équation de Kubelka-Monk, où k est le coefficient d'absorption de lumière et s est le coefficient de diffraction de lumière (également connu sous la terminologie anglo-saxonne 'light scattering coefficient') :

[Math 1]

$$k/s = \frac{(1-R)^2}{2R}$$

Le spectre obtenu corrobore l'observation faite à l'œil nu : la seconde pièce en bois montre une absorption plus élevée dans la longueur d'onde correspondant aux rayonnements UV que celle d'une pièce en bois naturel. Par comparaison à la courbe de référence, on voit l'apparition de zones d'absorption caractéristiques de la molécule greffée. La mesure est reproduite sur la seconde pièce en bois préalablement trempée dans l'acétone : le même spectre de pseudo absorbance est obtenu (courbe légèrement supérieure à l'autre obtenue sans lessivage à l'acétone). Ces éléments tendent à prouver que la greffe est bien obtenue par liaison covalente non lessivable, du groupement imine aromatique sur le bois. Notons également que le spectre obtenu est une signature de la nature du groupement greffé sur le bois, il varie en effet selon la nature chimique du goupement imine aromatique greffé.

**Résistance aux UV** :

La photostabilité et la résistance aux conditions climatiques ont été évaluées en suivant le changement de couleur après exposition de pièces en bois à la lumière UV d'une lampe Xenon QSUN Xe-3-HSC (Q-Lab, Westlake, USA). L'irradiation a été faite à 89 W $m^{-2}$ $nm^{-1}$ et à une longueur d'onde de 340 nm. Le cycle a consisté en une phase de 2.5 h avec lumière et 30 min sans exposition à 45°C. L'humidité était fixée à 50 et 90% pour les phases avec lumière et sans exposition respectivement. Les changements de couleur des surfaces de bois reliées à l'irradiation ont été mesurées via un colorimètre Color Guide 45/0 (BYK Gardner GmbH, Geretsried, Germany). La couleur était exprimée avec les coordonnées chromatiques CIE L*a*b* et prises à la même position sur l'échantillon à chaque mesure. Le changement de couleur ΔE a été calculé depuis les paramètres avant irradiation (L0, a0, b0) et après chaque période de temps dans la chambre (Li, ai, bi) avec l'équation suivante :

[Math 2]

$$\Delta E = \sqrt{(L_i - L_0)^2 + (a_i - a_0)^2 + (b_i - b_0)^2}$$

Notons qu'une différence visuelle sur la pièce en bois n'est visible à l'œil nu qu'à partir d'une valeur de ΔE supérieure à 4. Aussi, plus la valeur de ΔE est importante, plus la couleur du bois est modifiée.

La greffe a été appliquée sur plusieurs pièces en bois de sorte à tester l'influence de différents groupements aromatiques, notamment avec le réactif phényl triméthoxysilane (ou PhTMOS), le benzaldéhyde, et l'hydroxy-naphtaldéhyde. Toutes ces pièces, ainsi qu'une pièce de référence (pièce en bois naturel, non fonctionalisée) ont été traitées aux UV comme précédemment décrit et le changement de couleur ΔE a été mesuré pour chacune des pièces par colorimétrie au cours du temps.

Les résultats illustrés à la figure 5 montrent que la pièce de référence subit un changement de couleur ΔE suivant une pente très importante dès le début de l'irradiation et pendant les trentes premières heures environ pour finir, après 300h, à un changement de couleur ΔE d'environ 14. Le traitement au PhTMOS atténue le changement de couleur vis à vis de la référence. La différence de comportement est surtout visible après 10h d'exposition. A 300 heures, le changement de couleur ΔE est inférieur à 8, ce qui est nettement inférieur à celui de la référence.

Les traitements effectués à partir d'un réactif d'amine (APTES ou urée) puis de réactif aldéhyde avec des groupes aromatiques présentent des substituants hydroxyles en position ortho, donnent des résultats encore meilleurs, voire des résultats dans des gammes sans changement de couleur pour les fonctionnalisations réalisées à partir d'urée et d'aldhéyde aromatique avec un susbtituant hydroxyle en ortho. La figure 5 indique en ordonnée des noms incomplets de naphtaldéhydes et benzaldéhydes pour des raisons de clarté mais il s'agit bien sûr des composés p-hydroxylés illustrées en figure 6.

Les groupements greffés au bois ont pour rôle d'absorber les UV (via les cycles aromatiques), les réactifs aldéhydes porteurs d'hydroxyle en ortho une fois greffés permettent non seulement d'absorber les UV via le cycle aromatique, mais ils semblent aussi capables de réémettre une radiation (autre que UV) via une conjugaison entre le OH et l'imine proche, ce qui expliquerait leur meilleure performance vis-à-vis du PhTMOS. Ainsi, les molécules greffées absorbent les rayonnements UV à la place des composants du bois, voire les absorbent puis réémettent une partie l'energie dans des longueurs d'ondes moins agressives. Il est supposé que la durée de vie du groupement greffé sur le bois, sera plus longue en présence des fonctions hydroxyles en ortho. Les expériences montrent qu'une greffe comportant un simple cycle aromatique, n'ayant pas la possibilité de réémettre l'énergie absorbée, induira tout de même un retard substantiel dans la dégradation du bois par comparaison à du bois traité par d'autres moyens.

Ainsi, grâce au procédé de l'invention, la stabilité des pièces en bois aux UV est augmentée, comme illustré ci dessus, et la greffe de molécules absorbant les UV s'est avérée efficace dans des conditions de vieillissement accélérées et naturelles.

## Revendications

**1.** Procédé de protection anti-UV pour pièces en bois, le procédé de protection anti-UV comprenant les étapes suivantes :

a) fourniture d'une pièce en bois comprenant des composants polymériques choisis parmi la lignine, la cellulose et les hémicelluloses sur lesquels est greffé au moins un groupement amine,
ledit au moins un groupement amine ayant été greffé sur lesdits composants polymériques par formation d'une liaison covalente au cours d'une réaction de greffe i) réalisée préalablement à l'étape a) par réaction d'au moins un réactif aminé sur au moins une fonction hydroxyle présente naturellement sur lesdits composants polymériques,
b) modification chimique du au moins un groupement amine par réaction avec un réactif aldéhyde aromatique, de sorte à greffer, par formation d'une liaison covalente, au moins un groupement imine aromatique sur lesdits composants polymériques.

**2.** Procédé de protection anti-UV selon la revendication 1, dans lequel le réactif aldéhyde aromatique comprend un groupement aromatique substitué par une fonction aldéhyde et au moins une fonction hydroxyle.

**3.** Procédé de protection anti-UV selon la revendication 2, dans lequel l'au moins une fonction hydroxyle est disposée en position ortho de la fonction aldéhyde sur le groupement aromatique.

4. Procédé de protection anti-UV selon l'une des revendications 1 à 3, dans lequel le réactif aldéhyde aromatique est choisi parmi du 1-hydroxy-2-naphtaldéhyde, du 2-hydroxy-1-naphthaldehyde, du 2,4-dihydroxybenzaldehyde, et/ou un composé de formule (I) avec R1, R2, R3 et R4 choisis indépendamment les uns des autres parmi l'hydrogène et un alkyle.

[Chem. 1]

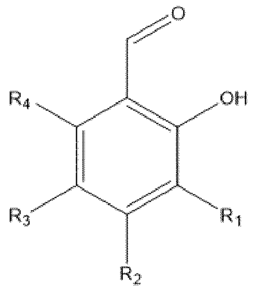

(I)

5. Procédé de protection anti-UV selon l'une des revendications 1 à 4, dans lequel l'étape b) comprend les étapes suivantes :

- disposition de la pièce en bois dans un contenant,
- disposition du réactif aldéhyde aromatique dans le contenant à distance de la pièce en bois,
- addition de dioxyde de carbone
- application d'une pression et d'une température telles que le dioxyde de carbone est à l'état supercritique, ou liquide, de manière à faire réagir le réactif aldéhyde aromatique avec l'au moins un groupement amine et conduire à la greffe d'au moins un groupement imine aromatique sur les composant polymériques de la pièce en bois.

6. Procédé de protection anti-UV selon l'une des revendications 1 à 5, dans lequel l'étape b) est réalisée sous pression.

7. Procédé de protection anti-UV selon l'une quelconque des revendications 1 à 6, dans lequel l'au moins un réactif aminé est choisi parmi l'urée, un diisocyanate, et/ou un silane comprenant un groupement aminé terminal dont l'Amino-Propyl TriéthoxySilane (APTES).

8. Pièce en bois protégée des UV, la pièce en bois comprenant des composants polymériques choisis parmi la lignine, la cellulose et les hémicelluloses sur au moins un desquels est greffé, par formation d'une liaison covalente, au moins un groupement imine aromatique, apte à absorber les rayonnements dans le domaine des ultra-violets.

9. Pièce en bois protégée des UV selon la revendication 8, dans laquelle l'au moins un groupement imine aromatique comprend un groupement aromatique présentant au moins un substituant hydroxy en ortho de la fonction imine.

[Fig. 1]

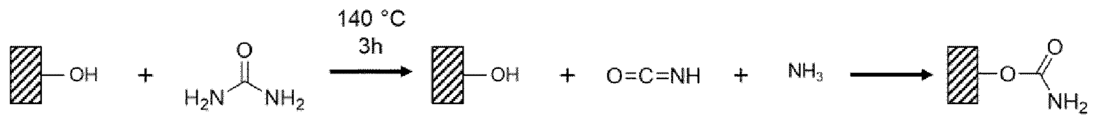


[Fig. 2]

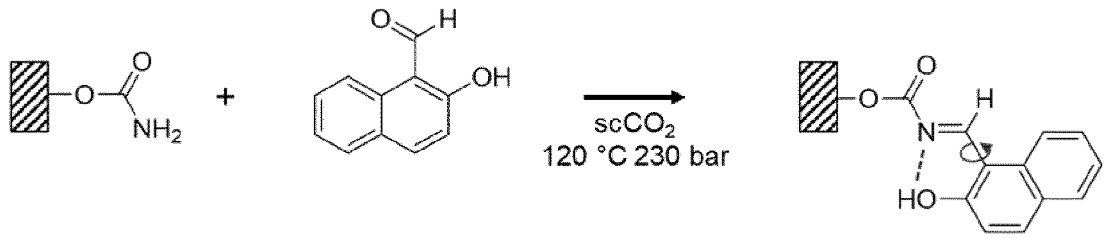


[Fig. 3]

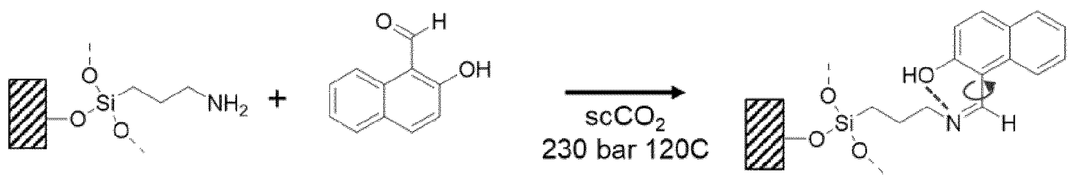

[Fig. 4]

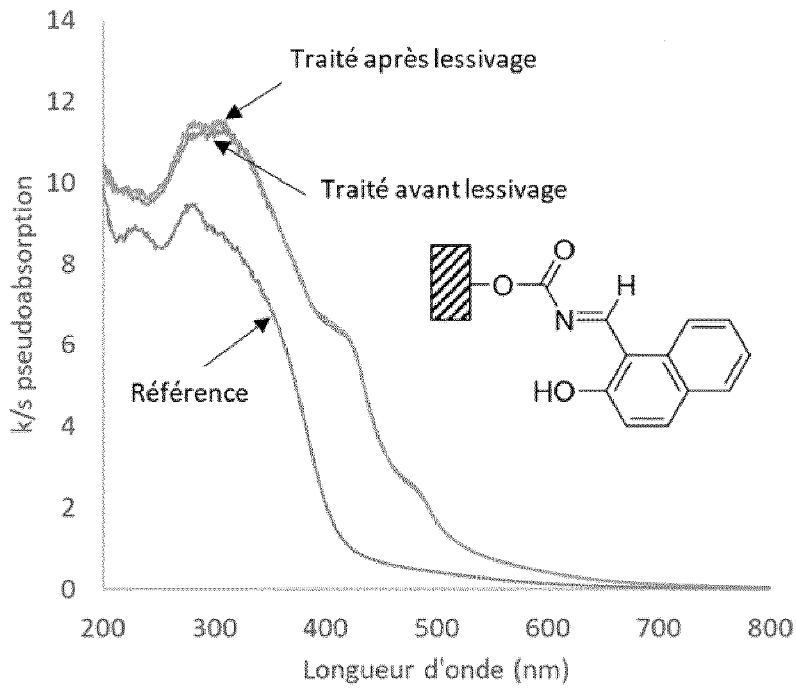
Traité après lessivage
Traité avant lessivage
Référence
k/s pseudoabsorption
Longueur d'onde (nm)
14
12
10
8
6
4
2
0
200
300
400
500
600
700
800

[Fig. 5]

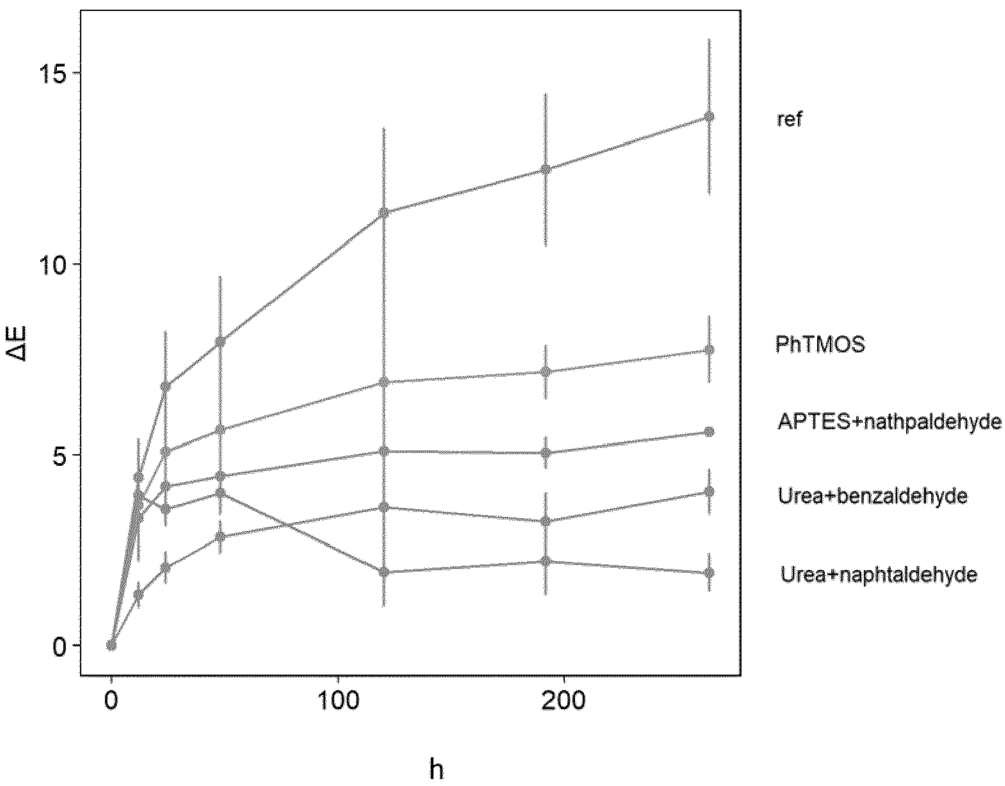
ref
PhTMOS
APTES+nathpaldehyde
Urea+benzaldehyde
Urea+naphtaldehyde
ΔE
h
15
10
5
0
0
100
200

[Fig. 6]

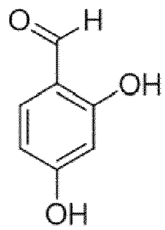
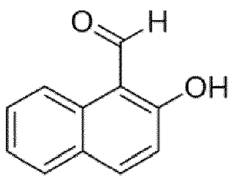
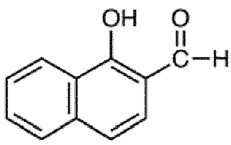
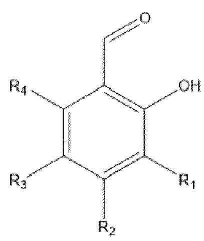
(I)

Europäisches Patentamt
European Patent Office
Office européen des brevets

## RAPPORT DE RECHERCHE EUROPEENNE

Numéro de la demande
EP 24 20 4629

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RICHA BANSAL: "UV resistant wood coating based on zinc oxide and cerium oxide dispersed linseed oil nano-emulsion", MATERIALS TODAY COMMUNICATIONS, vol. 30, 1 mars 2022 (2022-03-01), page 103177, XP093154000, GB ISSN: 2352-4928, DOI: 10.1016/j.mtcomm.2022.103177 * page 2, alinéas 2., 2.1., 2.2. * * page 3; figure 1 * * page 7, alinéa 4 * ----- | 1-9 | INV. B27K3/02 B27K3/08 B27K3/34 C07C249/02 |
| X | CN 116 396 256 A (UNIV ZHEJIANG A&F) 7 juillet 2023 (2023-07-07) * abrégé * * Contents of the invention * * exemples 1-4 * ----- | 1-9 | |
| A | FR 3 102 478 A1 (COMMISSARIAT ENERGIE ATOMIQUE [FR]) 30 avril 2021 (2021-04-30) * alinéas [0017] - [0021], [0038] * * exemples 1, 2 * * revendications 1-3, 15, 16 * ----- | 1-9 | DOMAINES TECHNIQUES RECHERCHES (IPC): B27K C07C |

Le présent rapport a été établi pour toutes les revendications

3

| Lieu de la recherche | Date d'achèvement de la recherche | Examinateur |
|---|---|---|
| Munich | 31 janvier 2025 | Lartigue, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 24 20 4629

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2025

| Document brevet cité au rapport de recherche | Date de publication | Membre(s) de la famille de brevet(s) | Date de publication |
|---|---|---|---|
| CN 116396256 A | 07-07-2023 | AUCUN | |
| FR 3102478 A1 | 30-04-2021 | EP 4031525 A1 | 27-07-2022 |
| | | FR 3102478 A1 | 30-04-2021 |
| | | US 2022412011 A1 | 29-12-2022 |
| | | WO 2021084185 A1 | 06-05-2021 |

EPO FORM P0460

Pour tout renseignement concernant cette annexe : voir Journal Officiel de l'Office européen des brevets, No.12/82